Europäisches Patentamt

European Patent Office

Office européen des brevets

(11) Publication number: **0 270 171**
**A2**

# EUROPEAN PATENT APPLICATION

(21) Application number: 87202314.8

(51) Int. Cl.4: **G11B 5/708**

(22) Date of filing: 25.11.87

(30) Priority: 27.11.86 NL 8603011

(43) Date of publication of application:
08.06.88 Bulletin 88/23

(84) Designated Contracting States:
BE DE FR GB NL

(71) Applicant: **PD Magnetics B.V.**
**Molenstraat 37**
**NL-4902 NM Oosterhout(NL)**

(72) Inventor: **Huisman, Hendrikus Fredericus**
c/o INT. OCTROOIBUREAU B.V. Prof.
Holstlaan 6
NL-5656 AA Eindhoven(NL)
Inventor: **Schaake, Rudolf Christiaan**
**Ferdinand**
c/o INT. OCTROOIBUREAU B.V. Prof.
Holstlaan 6
NL-5656 AA Eindhoven(NL)

(74) Representative: **Weening, Cornelis et al**
**INTERNATIONAAL OCTROOIBUREAU B.V.**
**Prof. Holstlaan 6**
**NL-5656 AA Eindhoven(NL)**

(54) Magnetic recording element.

(57) A magnetic recording element comprising a carrier and a magnetic coating which contains a magnetic pigment of $CrO_2$ particles, a binder, auxiliary substances and a non-magnetic pigment of particles of a lead and/or magnesium compound.

## Magnetic recording element

The invention relates to a magnetic recording element comprising a carrier and a magnetic coating which contains a magnetic pigment of $CrO_2$ particles, a non-magnetic pigment, binders and auxiliary substances.

The magnetic recording element is used for recording audio information, video information or data. The element may take the form of a sheet, disc or tape. In particular audio and video tapes are frequently used. During operation of the recording and playback device (recorder) the tape is moved past the recording and playback head, such as a video head, with a speed of, for example, 3-7 m/s.

The magnetic-pigment content in the magnetic coating, the so-called pigment load, is high and generally amounts to at least 70 % by weight, i.e. approximately 50 % by volume or more. Apart from the magnetic properties the pigment particles also largely determine the mechanical properties such as, for example, the coefficient of friction of the magnetic coating.

When the magnetic tape is moved past the recording and playback head, the head must be subject to a very low degree of wear in the order of 1-4μm and preferably from 1-2 μm per 100 hours of operation. When the head is not subject to wear, dust is deposited on the head. This leads to a deterioration of the recording signal, such as the video or audio signal. When the head is subject to too high a degree of wear of, for example, 10 μm per 100 hours the recording playback head must be replaced too soon which is uneconomical.

Magnetic pigments from $\gamma$ -$Fe_2$ $O_3$ particles or from metal powder are relatively soft. In order to increase the resistance to wear of magnetic tapes which contain these magnetic pigment particles and to avoid deposition of dust on the magnetic head it has been proposed to include a non-magnetic pigment of hard, abrasive particles such as $Al_2$ $O_3$ and $Cr_2$ $O_3$ particles in the magnetic coating. Reference is made to European Patent Application 0,138,036 and German Offenlegungsschrift 33 25 972.

When a magnetic pigment of $CrO_2$ particles is used the situation is entirely different. $CrO_2$ particles are hard particles, they are much harder than $\gamma$ -$Fe_2$ $O_3$ particles or metal powder such as Fe powder. In order to limit wear of the playback head the composition of the $CrO_2$ tape must be adapted to the hardness of the $CrO_2$ particles. In practice this means that relatively soft binders are used such as polyesterurethane binders of a soft type, in combination with a relatively large quantity of a lubricant. Owing to the soft binder the somewhat protruding $CrO_2$ particles are pressed into the surface layer of the magnetic coating so that the magnetic coating has a smooth surface. This causes a drag problem i.e. after stopping the tape has a tendency to hardly or not regain the desired speed. This so-called drag is referred to, for example, in column 3, lines 30-39 of United States Patent Specification 4,525,424.

The use of a harder binder such as a harder polyester urethane binder described in United States Patent Specifications 4,284,750 and 4,525,424 leads to excessive head wear of 10 μm or more per 100 hours of playing times.

European Patent Application 0,132,0040 describes a magnetic recording element, a substantial portion of whose $CrO_2$ magnetic pigment, i.e. 25-50 % by volume, is replaced by non-magnetic particles. The non-magnetic particles have a Moh hardness of 1-7 such as synthetic resin particles having a Moh hardness of 1-3, $\alpha$ -$Fe_2$ $O_3$ or ZnO particles having a Moh hardness of 4-5 or $SiO_2$ and $Cr_2$ $O_3$ particles having a Moh hardness of 6-7. Thus, a head wear is reduced and the signal deterioration remains relatively small.

It is an object of the invention to provide a magnetic recording element having improved properties.

One object of the invention is to provide a magnetic recording element having improved mechanical properties such as a low coefficient of friction and a low degree of head wear, in combination with improved magnetic properties, such as a great signal strength and a high [Br]/Bs ratio. The latter factor is the quotient of the magnetic moment in the remanent state and in the saturated state. It is also known as the squareness of a magnetic medium.

A further object of the invention is to provide a magnetic recording element, the manufacture of which offers technological advantages. In particular the filtration behaviour of the magnetic lacquer has improved. The magnetic lacquer is a dispersion of the magnetic pigment in a solution of the binder. The lacquer is filtered and applied to a carrier in a thin layer. After drying, in which process the solvent is removed, and after calendering a magnetic coating is formed. The filtration process is a critical process step. An improvement of the filtration behaviour does not only lead to an attractive process but also to a higher and more uniform quality of the recording element.

These objects are accomplished by means of a recording element of the type as described in the opening paragraph, which is characterized according to the invention in that the non-magnetic pigment is a reactive pigment of particles which contain a lead or magnesium compound in a quantity from 2-15 % by weight of the total quantity of pigment, which particles have a particle diameter from 0.5-2.0 microns and a Moh's hardness value of maximally 5.

The magnetic recording element according to the invention, when moved past the recording and playback head, cause an ideal degree of head-wear of 0.5-1.5 microns per 100 hours of operation.

The reactive pigment, also known as active pigment, shows a strong interaction with the binder material. Such a pigment is firmly held within the binder-matrix so that particles of the pigment are not transported or in particular are not moved inwardly under the influence of head pressure. Otherwise the recording and playback head would run over the hard $CrO_2$ particles at operation of the recording element, resulting into an unacceptably high head-wear.

The mean particle size of the non-magnetic pigment must be from 0.5-2.0 microns. At a mean particle size lower than 0.5 microns, the roughness of the surface of the magnetic coating would be determined by the hard $CrO_2$ particles which protrude above said surface over a larger distance then the small non-magnetic particles, resulting into an unacceptably high head-wear. At at mean particle size larger than 2.0 microns the signal-to-noise ratio drops considerably as a result of a reduced signal and an enlarged noise factor due to the high roughness of the surface of the magnetic coating.

As said hereabove pigments with a strong interaction with the binder material are known as such under the general name of active or reactive pigments. Reference may be made to H.W. Talen, The Influence of Pigments on the Mechanical Properties of Paint Films, Journ. of the Oil and Colour Chem. Ass. No. 376, pages 455-472 1951.

A quite simple and effective method to determine whether a pigment is reactive or not, consists herein that a small amount (less than 5% by weight of the pigment to be tested, is added to a usual magnetic lacquer composition, which is a dispersion of the magnetic pigment in a solution of the binder. If the above addition results into an increase of the Young's Modules, a reactive pigment is involved. In case of a non-reactive pigment, the Young's Modulus would decrease.

As an example of reactive pigments White Hiding Lead pigments are mentioned known from F.J. Dunn Jr., Pigment Handbook, Vol. 1, Editor T.C. Patton Wiley Interscience N.Y. Chapter 1-A-c, page 65 etc. It should be observed that from some compound several modifications or forms are know which not all show reactivity with the binder material. An example thereof is magnesium silicate. Only the form known as talc or soapstone corresponding to the chemical formula $3MgO.4SiO_2.H_2O$, is reactive and is suitable for use in the recording element of the invention.

Preferably lead salts are used such as lead titanate, lead salicylate and lead-zinc oxide. In particular basic lead salts such as basic lead sulphate and basic lead carbonate are quite suitable. Satisfactory results are obtained, in particular, when a non-magnetic pigment is used which consists of particles which are formed from basic lead carbonate $Pb(OH)_2CO_3$.

It is to be noted that German Patent Specification 21 62 332 describes a chromium dioxide mass which is suitable for use in a magnetic tape, the chromium dioxide being treated with lead powder, zinc powder, lead oxide, zinc oxide, a lead salt, a zinc salt, a barium salt or a cadmium salt. The purpose of this treatment is to bind the hexavalent chromium ions in the chromium dioxide, which ions exhibit an adverse oxidizing influence, and convert them into insoluble chromates. A small quantity of the additive, from 0.7 to 1.5 Mol.% of the quantity of soluble hexavalent chromium irons is added. After the treatment a chromium dioxide mass is obtained which contains lead-, zinc-, barium-or cardmium chromates or dichromates.

This treatment of the magnetic chromium dioxide pigment differs substantially from the measure according to the invention, in which non-magnetic particles having a specific particle size and which are used in a relatively large quantity are dispersed in the magnetic coating. The object of the present invention, which aims at an improvement of the mechanical and magnetic properties of a recording element, also differs essentially from that of the German Patent Specification which has for its object the immobilization of oxidizing impurities of a $CrO_2$ pigment.

The manufacture of the recording element according to the invention is carried out according to a method which is known per se . For this purpose all components of the magnetic coating, i.e. the $CrO_2$ pigment, the non-magnetic pigment, the binder and the auxiliary substances are thoroughly mixed in a ball mill together with a solvent for the binder.

A suitable binder is, for example, polyvinyl chloride, polyvinyl acetate, polyacrylates, polyester, polyester amides, polyurethanes and copolymers of at least two monomers selected from the group consisting of vinyl chloride, vinyl acetate, acrylonitrile, vinyl alcohol, vinly butyral and vinylidene chloride. A suitable binder is, in particular, a polyester urethane having a molecular weight from 50,000 to 150,000.

An important auxiliary substance is a dispersion agent by means of which the non-magnetic and magnetic particles are dispersed in the binder. Examples of suitable dispersion agents are lecithine, mono-or diesters of phosphoric acid and alcohols which may be ethoxylated, alkylaryl sulphonic acids or salts thereof, salts of fatty acids and polar groups containing aliphatic amines such as bis(2-hydroxyethyl) octadecyl amine as well as polyester urethanes having a relatively low molecular weight from 1,000-10,000. The dispersing agent is used in a quantity from 1-10 % by weight of the quantity of pigment.

A further auxiliary substance is a lubricant which is used in a quantity from, for example, 0.1-10 % by weight of the quantity of the binder used. Examples of suitable lubricants are fatty acids such as oleic acid and stearine acid, fatty acid esters and salts such as butyl stearate and zinc stearate, fatty acid amides such as stearylamide, oils such as silicon oil and mineral oils, sulphides such as molybdenum disulphide and tungsten disulphide, graphite and mixtures of these substances.

As solvents for the binder organic fluids are used such as esters, for example ethyl acetate, ethers such as tetrahydrofuran, ketones such as methyl ethyl ketone, methyl isobutyl ketone and cyclohexanone, hydrocarbons such as toluene and chlorated hydrocarbons such as 1,2-dichloroethane.

After the dispersion has been properly ground in the ball mill any remaining larger magnetic and non-magnetic particles are sieved out and the magnetic coating obtained is applied to the carrier in a uniform layer. As has been stated hereinbefore the carrier may take the shape of a tape, sheet, disc and the like and, dependent upon the material from which the carrier is made, it may be provided with a suitable adhesive layer for the magnetic coating to be provided on the carrier. Apart from the adhesive layer other layers such as an anti-static layer may be provided. Subsequently, the assembly is dried, in which process the solvent evaporates and a recording layer with a thickness from 2 to 10 $\mu$ remains on the carrier. The layer is subjected to a calendering process in which the surface of the layer is made to be smoother.

The invention will now be explained in more detail with reference to the following example.

Example :

Manufacture of a video tape.

A magnetic coating is produced by mixing the following components in a ball mill containing 600 glass beads:

72 parts by weight of chromium dioxide

9 parts by weight of a non-magnetic pigment of $Pb_2(OH)_2CO_3$ having a particle size from 0.5 to 1.5 $\mu$m

3.5 parts by weight of lecithine (dispersing agent)

15 parts by weight of polyester urethane having a molecular weight from 50,000 - 150,000 (binder), which are added as a 16% solution in tetrahydrofuran

1 part by weight of butyl stearate (lubricant)

0.3 parts by weight of zinc stearate (lubricant)

0.05 parts by weight of stearamide (lubricant)

3 parts by weight of isocyanate hardener

80 parts by weight of tetrahydrofuran

60 parts by weight of methyl isobutyl ketone

100 parts by weight of cyclohexanone.

The mixture is mixed for several hours, after which it is filtered and applied in the form of a layer to a polyester foil with a thickness of 15 $\mu$m. After drying and calendering the layer thickness of the coating (magnetic recording medium) of the video tape is obtained 2.5 $\mu$m.

In a similar manner a second video tape (comparative tape) is produced in which the non-magnetic pigment of $Pb_2(OH)_2CO_3$ is replaced by the same quantity by weight of ZnO.

The mechanical and magnetic properties of these tapes are tested according to the standards applying for this purpose. The results are shown in the table below.

4

TABLE

| type of tape | filtration behaviour $k \times 10^{-5}$ | Br/Bs | coefficient of friction μ | S/N Chroma in dB |
|---|---|---|---|---|
| 1 | 204 | 0.836 | 0.17 | 0,0 |
| 2 | 239 | 0.824 | 0.21 | -1,0 |

As shown in the table the type of tape is given in column 1, type 1 being a tape according to the invention, as described above, containing non-magnetic basic lead carbonate. Type 2 is the reference tape as stated above, in which the basic lead carbonate is replaced by the same quantity of zinc oxide.

Column 2 gives the result of a standard filtration measurement carried out with magnetic lacquer as it is provided on the carrier from the ball mill. The filtration measurement is carried out by means of a filter having a pore diameter of 3 μm (Horo filter) and a constant different in pressure on both sides of the filter. According to this test the filtered mass (m) is measured as a function of time (t). The filtration process can be described by means of the formula: $\frac{t}{m} = a_o + Kt$. In this formula $a_o$ is a constant which is related to the initial speed. Column 2 of the table gives the factor $k \times 10^5$. As the factor k is higher the filter will obstruct sooner.

Column 3 gives the factor Br/Bs which is the quotient of the magnetic moment in the remanent state and in the saturated state. This quotient is also called "squareness". This factor must be as high as possible to obtain an optimal magnetic quality.

Column 4 gives the friction factor μ. The friction is measured by means of a looptribometer in which a steel pin having a diameter of 25 mm is used. The tape tension was 0.3 N. The tape speed was 0.5 cm.s $^{-1}$.

Column 5 gives the S/N Chroma in dB. This S/N Chroma is the signal-to-noise ratio of the colour signal relative to a reference tape, measured at the output of the recorder. A CrO $_2$ tape which was not provided with a non-magnetic pigment was used as a reference tape.

## Claims

1. A magnetic recording element comprising a carrier and a magnetic coating which contains a magnetic pigment of CrO $_2$ particles, a non-magnetic pigment, binders and auxiliary substances, characterized in that the non-magnetic pigment is a reactive pigment of particles which contain a lead or magnesium compound in a quantity from 2-15 % by weight of the total quantity of pigment, which particles have a particle diameter of 0.5-2.0 microns and a Moh's hardness value of maximally 5.

2. A magnetic recording element as claimed in Claim 1, characterized in that the non-magnetic pigment contains particles of a lead salt.

3. A magnetic recording element as claimed in Claim 2, characterized in that the non-magnetic pigment contains particles of basic lead salt, in particular of basic lead carbonate.